# EUROPÄISCHE PATENTANMELDUNG

(11) **EP 1 350 976 A1**
(43) Veröffentlichungstag der Anmeldung: **08.10.2003**
(21) Anmeldenummer: 02007271.6
(22) Anmeldetag: 02.04.2002
(51) Int. Cl.: F16D 13/70, F16D 13/71

(54) **Reibungskupplungsanordnung**

(71) Anmelder: Sachs Giesserei GmbH, 97318 Kitzingen (DE); ZF Sachs AG, 97424 Schweinfurt (DE)
(72) Erfinder: Diemer, Matthias Dr., 97464 Niederwerm (DE); Hoffelner, Ingrid, 97478 Knetzgau (DE); Orlamünder, Andreas, 97422 Schweinfurt (DE); Frieg, Jürgen, 97520 Röthlein (DE); Kelter, Jens, 97318 Kitzingen (DE)

(57) **Zusammenfassung**

Es wird eine Reibungskupplungsanordnung, insbesondere für Kraftfahrzeuge, beschrieben, welche ein Kupplungsgehäuse (12), mindestens eine mit dem Kupplungsgehäuse drehfest verbundene, in diesem axial verlagerbare erste Reibplatte (14) und eine das Kupplungsgehäuse tragende zweite Reibplatte (16), sowie mindestens eine Mitnehmerscheibe (18), die axial benachbart zu der ersten und der zweiten Reibplatte angeordnet ist und die beidseitig Reibbeläge (20) aufweist, welche mit den Reibplatten zusammenwirken, und weiterhin eine Feder (22) umfasst, mit der eine Druckkraft zum Betätigen der Kupplung auf die mindestens eine erste Reibplatte (14) aufgebracht wird. Die erfindungsgemäße Reibungskupplungsanordnung zeichnet sich dadurch aus, dass zumindest eine der Reibplatten zumindest teilweise aus einer Metallmatrix und mindestens einer darin eingeschlossenen nichtmetallischen Fremdphase, die gemeinsam einen Metallmatrix-Verbundwerkstoff bilden, ausgeführt ist. In einem weiteren Aspekt der Erfindung wird das Kupplungsgehäuse ebenfalls aus einem Metallmatrix-Verbundwerkstoff gebildet.

## Beschreibung

Die Erfindung betrifft eine Reibungskupplungsanordnung, insbesondere für Kraftfahrzeuge, gemäß dem Oberbegriff des Patentanspruchs 1, von dem sowohl Einscheiben- als auch Mehrscheibenkupplungen erfasst werden. Bei derartigen Reibungskupplungen werden bevorzugt an Mitnehmerscheiben angeordnete organisch gebundene Reibbeläge verwendet, die gegenüber metallischen Reibplatten in Form der Anpressplatte und des Schwungrades wirken. In PKW-Kupplungen wird üblicherweise Grauguss mit den Kennbuchstaben GG, GGV oder GGG als Reibwerkstoff verwendet. Die rotierenden Komponenten Anpressplatte und Schwungrad unterliegen im Betrieb einer sehr hohen mechanischen Belastung, welche weitgehend aus der zur Materialdichte direkt proportionalen Fliehkraft resultiert. Grauguss hat bei einer einer Dichte von 7.2 kg/dm³ eine von der Güte abhängige begrenzte Festigkeit von ca. 250MPa bis 400Mpa. Damit liegt ein für die Verwendung als Kupplungsmaterial relativ niedriges und ungünstiges Verhältnis von Festigkeit zu Dichte vor.

Als Alternative zu Gusswerkstoffen wird bei begrenztem Bauraum oder erhöhten Festigkeitsforderungen, z.B. bei erhöhten Beschleunigungsanforderungen, für eine Reibplatte zunehmend Stahl eingesetzt. Stahl besitzt im Allgemeinen eine höhere Festigkeit, die aber zum Teil durch die gegenüber Grauguss erhöhte Dichte von 7.85kg/dm³ relativiert wird.

Die Komponenten einer Reibungskupplung sind allgemein so auszulegen, dass die beim Betreiben der Kupplung anfallendende Wärmemenge von- diesen aufgenommen und abgeführt werden kann, ohne dass es zu einer Überhitzung und nachteiligen Beeinträchtigung der Reibeigenschaften kommt. Die konstruktive Ausgestaltung der verwendeten Reibplatten, d.h. die Materialstärke und damit die Masse der Bauteile, wird daher vorwiegend von der Wärmekapazität des verwendeten Werkstoffs bestimmt. Grauguss und Stahl haben eine etwa gleiche Wärmekapazität von ca. 500J·kg⁻¹·K⁻¹. Leichtere Konstruktionen, wie sie zunehmend bei verbrauchsoptimierten Fahrzeugen, bei beschleunigungsstarken Anwendungen und zur Drehträgheits-Kompensation von neuartigen Komponenten im Antriebsstrang bspw. einem Startergenerator oder einer Doppelkupplung erforderlich werden, sind mit den genannten Werkstoffen nicht konsequent umsetzbar.

Eine weitere wesentliche physikalische Größe einer Reibungskupplung stellt die Wärmeleitfähigkeit der Reibplatten dar. Grauguss und Stahl haben vergleichbare Werte der Wärmeleitfähigkeit von ca. 50W·m⁻¹K⁻¹. Bei einer solchen vergleichsweise niedrigen Wärmeleitfähigkeit kann die anfallende Reibungswärme oft nicht schnell genug aus dem Reibbereich abgeführt werden und es kann als Folgeerscheinung zu einem Wärmestau kommen, wobei die Temperatur des Reibbereiches sehr rasch hohe Werte annehmen kann. Dieser Effekt kann zu einer merklichen Krümmung (Schirmung) der Anpressplatte führen und in einer plötzlichen Verschlechterung der Reibleistung (Fading) und sogar dem Ausfall der Reibungskupplung resultieren.

Weiterhin sind Grauguss und Stahl auch bezüglich ihrer Verschleißfestigkeit begrenzt, was den Einsatz von tribologisch günstigen, aber aggressiven Reibbelägen, z.B. metallischen Sinterwerkstoffen, auf der Mitnehmerscheibe nur bedingt zulässt. Der Abrieb einer PKW-Kupplung beträgt über eine angenommene Lebensdauer von ca. 200.000 km etwa 0,3 bis 0,5 mm.

Zur Erfüllung der hohen Oberflächenanforderungen müssen Reibplatten aus Grauguss oder Stahl spanend endbearbeitet werden. Dieser Vorgang kann ungünstigerweise zum Verzug der Reibplatte führen. Nachteilig sind ebenfalls die dabei anfallenden hohen Fertigungskosten.

Es leitet sich daraus die Aufgabe ab, eine Reibungskupplungsanordnung mit einem Werkstoff vorzuschlagen, welcher den hohen Anforderungen beim Betreiben einer Reibungskupplungsanordnung sicher Stand hält und dabei gleichzeitig eine Gewichtsersparnis gegenüber konventionellen Werkstoffen erbringt.

Die Aufgabe wird gelöst durch das kennzeichnende Merkmal des Patentanspruchs 1. Durch die Anwendung eines Metallmatrix-Verbundwerkstoffs (Metal Matrix Composite, MMC) können einerseits die Vorzüge des Metalls, insbesondere dessen geringe Dichte, die hohe Dehnbarkeit und die hervorragende thermische Leitfähigkeit und andererseits die Vorzüge nichtmetallischer Werkstoffe, insbesondere deren hohe Festigkeit, hohe Steifigkeit und hohe Verschleissbeständigkeit, sowie die geringe thermische Dehnung miteinander kombiniert werden. Es wird somit eine Reibungskupplungsanordnung geschaffen, bei der eine Reibplatte eine gegenüber den bisher dafür benutzten Werkstoffen erhöhte Verschleissfestigkeit aufweist, wobei diese zudem eine geringere Masse hat und den hohen Betriebsbelastungen aufgrund ihrer hohen Festigkeit bestens Stand halten kann.

Gemäß dem Merkmal des Patentanspruchs 2 kann ein Metallmatrix-Verbundwerkstoff ebenso vorteilhaft für das Kupplungsgehäuse eingesetzt werden. Beispielsweise würde ein Kupplungsgehäuse mit einer vorgegebenen Steifigkeit bei Verwendung des Verbundwerkstoffes Duralcan mit einem Elastizitätsmodul von 101 GPa gegenüber dem üblichen Stahlwerkstoff mit einem Elastizitätsmodul von 210 GPa einerseits zwar eine um den Faktor 1,28 höhere Materialstärke erfordern, andererseits ergibt sich dabei gegenüber dem Stahlgehäuse jedoch ein deutlicher Gewichtsvorteil von etwa 55%.

Die sich aus der Verwendung eines Metallmatrix-Verbundwerkstoffs ergebenden Vorteile sollen beispielhaft anhand einer mit 20 Volumen-% SiC verstärkten Aluminiumlegierung mit der Bezeichnung DURALCAN F3S dargestellt werden.

Die folgende Tabelle 1 gibt dazu auszugsweise die für eine Reibungskupplung relevanten physikalische Materialeigenschaften an:

**Tabelle 1**

| Daten für Grauguss: Bosch, Kraftfahrtechnisches Taschenbuch, 21. Auflage, Seite 178; Daten für Al-MMC: Alcan, Informationsbroschüre Duralcan, 1996 | | | | | |
|---|---|---|---|---|---|
| | Dichte | Wärmeleitung | Wärmekapazität | Wärmekapazität | Temperaturleitzahl |
| | ρ | λ | c | c' | a=λ/c*ρ |
| | kg/dm³ | W/mK | J/kgK | J/dm³K | m²/s |
| | | | | | |
| Grauguss | 7.25 | 58 | 500 | 3625 | 1.6E-05 |
| Al-MMC 20%SiC | 2.77 | 185 | 921 | 2551.17 | 7.3E-05 |
| Faktor(Duralcan/GG) | 0.4 | 3.2 | 1.842 | 0.704 | 4.5 |
| | | | | | |
| Quellen: Bosch Handbuch (GG), Alcan Broschüre (Duralcan) | | | | | |

Geht man bei einer vergleichenden Betrachtung der Werkstoffe zunächst von Reibplatten gleicher Masse aus, so kann der Aluminium-Verbundwerkstoff eine um den Faktor 1.8 erhöhte Wärmemenge speichern. Das bedeutet, dass ein Anfahrvorgang, der bei einer konventionellen Anpressplatte zu einer Temperaturerhöhung von 200 K führt, eine massengleiche Aluminium-Anpressplatte nur um 111 K aufheizt, was zu einem deutlich verringerten Verschleiß und ebenso zu einer verringerten Fadingempfindlichkeit von beispielsweise organischen Reibbelägen der Mitnehmerscheibe führt. Andererseits ergibt sich daraus, dass zur Aufnahme einer identischen Wärmemenge, die Masse des Aluminium-Verbundwerkstoffs gegenüber Grauguß fast halbiert und dadurch eine beachtliche Gewichtsersparnis erzielt werden kann.

Die Wärmeleitfähigkeit und die Temperaturleitzahl des Aluminium-Verbundwerkstoffs liegen um den Faktor 3.2 bzw. 4.5 über denen von Grauguss. Geht man von volumengleichen Anpressplatten aus, die nach dem Reibvorgang eine gleiche Endtemperatur aufweisen sollen, so kann der Aluminium-Verbundwerkstoff nur etwa 70 % der Wärmemenge von Grauguss aufnehmen. Wenn sich im Ergebnis eines Reibvorganges die Temperatur eines Graugussreferenzteils um eine Temperaturdifferenz ΔT erhöht, so erfährt eine volumengleich ersetzte Anpressplatte aus dem Aluminium-Verbundwerkstoff eine Temperaturerhöhung um den Faktor 1,42ΔT. Durch diese letzte, rein rechnerisch-formale Betrachtung erscheint es zunächst wenig erfolgversprechend, den Aluminium-Verbundwerkstoff als Material für eine Reibplatte einer Reibungskupplung einzusetzen, da bei einer Temperaturerhöhung in aller Regel die Gefahr einer Verschlechterung der Reibeigenschaften und damit einer Funktionseinschränkung besteht.

Im Folgenden bezieht sich der Anmelder auf eigene Untersuchungen zum Verlauf der Reibflächentemperatur in Abhängigkeit von der Reibzeit bei einer PKW-Kupplung, wobei eine konstante Reibleistung von 80W/cm². angenommen wurde.

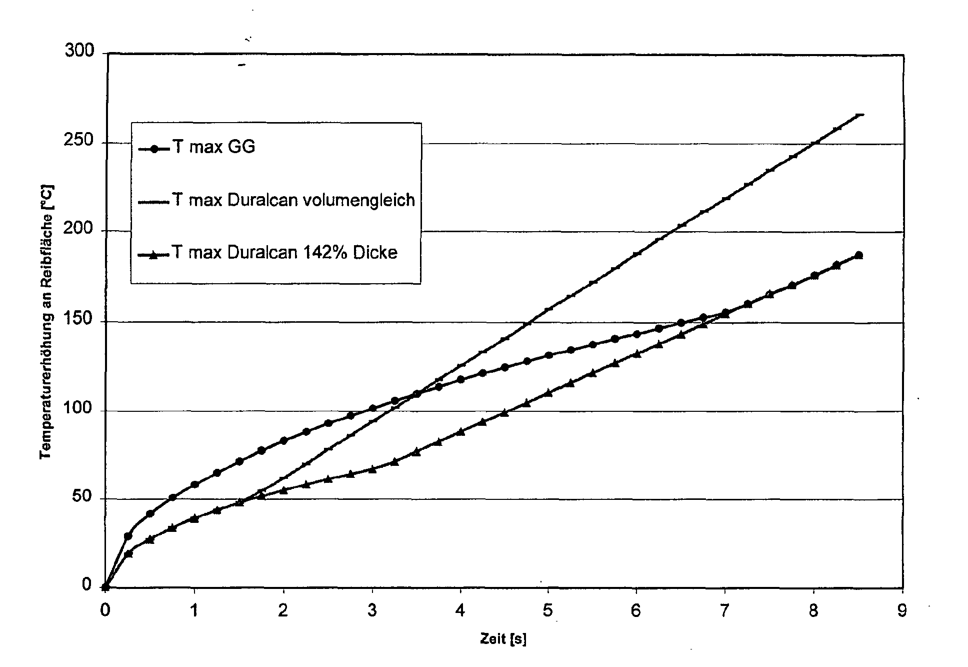

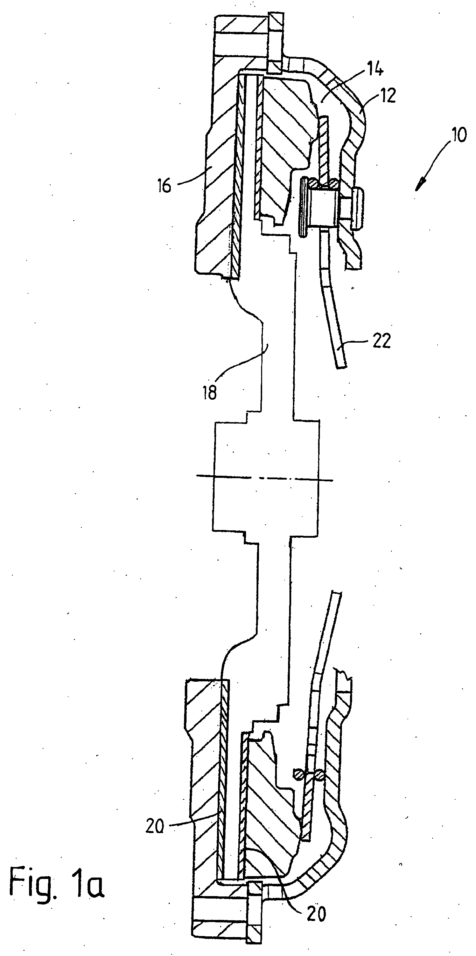

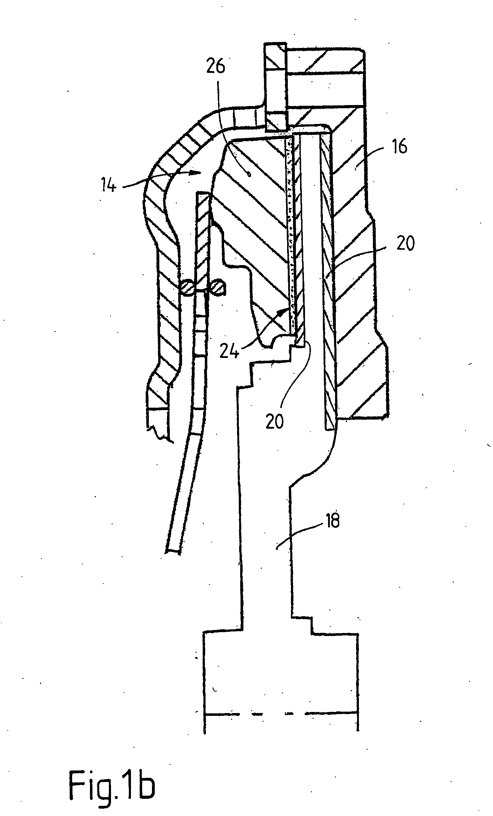

### Abb. 1: Reibflächentemperatur in Abhängigkeit von der Reibzeit bei einer PKW-Kupplung

Es wurden dabei drei Anpressplatten verglichen, wovon eine Anpressplatte aus Grauguss (GG), eine volumengleiche Anpressplatte aus Al-MMC sowie eine weitere Anpressplatte aus Al-MMC, die mit einer Materialstärke von 142 % ausgeführt ist. Aus Abb. 1 ist ersichtlich, dass bei kleinen Reibzeiten die Al-MMC-Anpressplatten eine um bis zu 35 K niedrigere Reibflächentemperatur gegenüber der GG-Anpressplatte aufweisen. Die volumengleiche Al-MMC-Anpressplatte, die nur 40 % der Masse GG-Anpressplatte besitzt, hat bei Reibvorgängen, die kürzer als 3,4 Sekunden dauern, eine niedrigere Reibflächentemperatur. Erst danach kommt die geringere thermische Speicherfähigkeit zum Tragen und führt bei einem andauernden Reibvorgang zu einer erhöhten Reibflächentemperatur. Die Al-MMC-Anpressplatte mit gleicher thermischer Speicherfähigkeit weist zwar ein um 42 % erhöhtes Ausgangsvolumen, jedoch dagegen nur 54 % der Masse der GG-Anpressplatte auf. Diese Anpressplatte zeigt bei Reibvorgängen, die weniger als 7 Sekunden andauern, das vergleichsweise günstigste thermische Verhalten. Daraus kann geschlussfolgert werden, dass sich ein Metallmatrix-Verbundwerkstoff entgegen dem Resultat der eingangs geführten Formalbetrachtung durchaus als Werkstoff für eine Reibplatte einer Reibungskupplungsanordnung eignet.

Weitere Versuche des Anmelders haben deutlich gemacht, dass die im Vergleich zu Al-MMC geringere Wärmeleitfähigkeit von Grauguß zu Beginn des Reibvorgangs und bei nur kurzen Reibzeiten in einer GG-Anpressplatte zu einem vergleichsweise großen Temperaturgradienten in Richtung der Reibflächennormalen führt. Im Gegensatz dazu kann sich in einer AI-MMC-Anpressplatte nur ein relativ flacher Temperaturgradient ausbilden. Es ist daher möglich, einen Wärmespeicherbereich in einem gewissen Abstand von dem Reibbereich, beispielsweise am Innendurchmesser der Anpressplatte auszubilden. Diese Position ist besonders günstig, um das Massenträgheitsmoment der Kupplungsanordnung möglichst gering zu halten. Die anfallende Reibungswärme erreicht den gesamten zur Verfügung stehenden Wärmespeicherbereich in sehr kurzer Zeit. Da die Schirmung der Anpressplatte wesentlich vom ausgegildeten Temperaturgradienten abhängt, kann durch die Verwendung von Al-MMC auch eine Verbesserung des reversiblen und irreversiblen Schirmverhaltens einer Reibplatte erwartet werden.

Neben den wärmetechnischen Vorteilen ist der Werkstoff Aluminium-MMC auch hinsichtlich Eigenverschleiß günstig, da die keramische Phase im Gefüge die Beständigkeit gegenüber abrasivem Angriff durch den Reibbelag erhöht.

Weitere Versuche des Anmelders belegen, dass das Reibwertniveau eines Reibplattes aus Al-MMC gegenüber einem konventionellen bleifreien Reibbelag unverändert hoch ist. Der in Dauerversuchen gemessene Verschleiß der organischen Qualität ist besonders niedrig.

Die geringe Dichte von AI-MMC führt unter Fliehkrafteinwirkung zu einer deutlich reduzierten Belastung und Beanspruchung gegenüber einem Vergleichsbauteil aus Grauguss. Die Berstsicherheit ist deutlich erhöht.

Ein Nebeneffekt der geringeren Dichte ist der verminderte Wuchtaufwand des fertigen Bauteils, da ein identischer Volumenfehler nur zu einer um den Faktor des Dichteverhältnis kleineren Unwucht führt.

Für die erfindungsgemässen Reibungskupplungsanordnungen ergeben sich somit eine Vielzahl von Anwendungen. Beispielhaft sind genannt:
- Doppelkupplungen, bei denen eine Reduzierung des Trägheitsmoments erforderlich ist;
- Systeme mit weiteren Komponenten, die einen Teil des zulässigen Gesamt-Trägheitsmoments bereits beanspruchen;
- Fahrzeuge mit erhöhten Leichtbau-Anforderungen;
- Fahrzeuge mit erhöhten Beschleunigungs-Anforderungen;
- Temperaturverschleiß- und Fading-kritische Anwendungen sowie
- Systeme mit erhöhten Anforderungen an die Verschleißfestigkeit der Reibplatte.

Nachstehend werden weitere Vorteile und Wirkungen von Weiterbildungen der Erfindung erläutert.

Es ist allgemein vorteilhaft, als Metallmatrix ein Leichtmetall oder eine Leichtmetalllegierung zu wählen, welche auf mindestens einem der Elemente Aluminium, Magnesium oder Titan basiert. Derartige Legierungssysteme sind bezüglich der Materialeigenschaften und der Herstellverfahren sehr weit erforscht und aus zahlreichen Anwendungen bereits bekannt.

Als Fremdphase eignen sich besonders gut hochschmelzende Oxide, Carbide, Boride oder Nitride insbesondere Al₂O₃, AIN, B₄C, Si₃N₄, SiC, Sialon, TiB₂, ZrO₂.

Mit Vorteil ist die Fremdphase in Form von Fasern in die Metallmatrix eingelagert.

Wenn die Fasern in der Metallmatrix eine Textur aufweisen, so können die mechanischen Eigenschaften und die Verschleissfestigkeit richtungsbezogen ausgebildet werden und die Werkstoffkomposition von Reibplatten kann somit an die auftretenden Hauptbeanspruchungsrichtungen angepasst werden.

Insbesondere zum Zweck einer flächenhaften Verstärkung der Matrix bietet es sich an, mit den Fasern eine gewebeartige Struktur, bspw. in Form eines Netzes auszubilden.

Es ist weiterhin sinnvoll, an einer Reibplatte verschiedene Bereiche, mit denen unterschiedliche Funktionen realisiert werden, auch konstruktiv oder vom Werkstoffgefüge unterschiedlich auszubilden. Eine Reibplatte kann somit mindestens einen Reibbereich und einen Wärmespeicherbereich aufweisen, wobei der Volumenanteil der nichtmetallischen Fremdphase in dem mindestens einen Reibbereich gegenüber derjenigen im Wärmespeicherbereich erhöht ist. Bei der Verwendung eines Metallmatrix-Verbundwerkstoffes kann einerseits die Wärmeleitfähigkeit des Wärmespeichers bei nahezu gleicher Wärmekapazität merklich erhöht werden und die im Reibbereich erzeugte Reibungswärme schnell und ohne merkliche Ausbildung eines Wärmestaus vom Reibbereich in den Wärmespeicherbereich abgeführt werden. Andererseits führt die höhere Volumenkonzentration der verstärkenden Fremdphase im Reibbereich zu einer Verbesserung der Verschleissfestigkeit.

Die erfindungsgemäße Kupplungsanordnung kann als Einscheiben-, aber auch als Mehrscheibenkupplung mit mehreren Reibplatten als Anpressplatten ausgebildet sein. Die axial innen angeordneten Anpressplatten sind thermisch besonders stark belastet. An diesen kann durch Ausnehmungen die Oberfläche vergrößert werden, wodurch eine Kühlstruktur gebildet wird, um die entstehende Reibungswärme effektiver abzuführen.

Fertigungstechnisch kann eine Reibplatte nach einer Vielzahl von Gussverfahren hergestellt werden. Gegenüber Grauguss, mit dem nicht alle Verfahren durchführbar sind, können beispielsweise das Druckguss-, das Kokillenguss-, das Sandguss-, das Schleudergussverfahren oder ein Thixo-Gussverfahren angewandt werden.

Für die Fertigung des Kupplungsgehäuses bieten sich gleichfalls die für eine Reibplatte erwähnten Werkstoffe und Verfahren an.

Eine besonders scharfe Grenze zwischen dem Reibbereich und dem Wärmespeicherbereich lässt sich erzielen, wenn der Reibbereich durch eine Oberfächenbehandlung des Wärmespeicherbereichs erzeugt wird. Hierbei können alle dafür geeigneten Techniken, z.B. das Laserpulverbeschichten, Plasmaspritzen oder ähnliche, angewandt werden.

In einer bevorzugten Weiterbildung der Erfindung ist die zweite Reibplatte mit Befestigungsmitteln am Schwungrad eines Verbrennungsmotors oder an einem Sekundärschwungrad angeordnet.

Alternativ dazu kann eine besonders kompakte Funktionseinheit aus einem Schwungrad oder einem Sekundärschwungrad und der zweiten Reibplatte durch Vergießen hergestellt werden.

Bei Anpreßplatten ist es bisher üblich, die an ihr ausgebildete Membranfederschneide in Umfangsrichtung zu unterbrechen und damit Luftdurchtrittsöffnungen zum Zwecke der Kühlung der Reibungskupplungsanordnung zu schaffen. Bei einer Reibplatte aus einem Metallmatrix-Verbundwerkstoff kann wegen der besseren thermischen Eigenschaften gegenüber Grauguß, die Membranfederschneide in Umfangsrichtung geschlossen ausgeführt werden. Damit erhöht sich die Auflagefläche für die Membranfeder und die Gefahr einer Einarbeitung der Membranfederschneide in die Membranfeder sinkt.

In einer vorteilhaften Weiterbildung der Erfindung ist vorgesehen, daß eine Reibplatte am Außenumfang eine Mehrzahl von Radialvorsprüngen aufweist, die sich durch Öffnungen des Kupplungsgehäuses erstrecken und dabei eine Zwangskühlvorrichtung ausbilden. Bei den im Betrieb auftretenden Drehzahlen einer Kraftfahrzeugkupplung im Bereich von ca. 500min⁻¹ bis 7000 min⁻¹ oder noch höher wird ein sehr hoher Ventilationseffekt zur Kühlung der Kupplungsanordnung erzielt.

Es stellt einen fertigungstechnischen Vorteil dar, einen Nietbolzen zur Aufnahme einer Blattfederbohrung beim Gußvorgang zur Herstellung einer Reibplatte mit in diese einzugießen. Dadurch kann beim Montieren der Kupplung die Teileanzahl reduziert werden.

Vorteilhaft kann das Kupplungsgehäuse Versteifungsrippen aufweisen. Dabei kann der Werkstoffeinsatz zur Erzielung einer vorgegebenen Festigkeit weiter reduziert und das Kupplungsgehäuse mit einem niedrigeren Gewicht hergestellt werden.

Bei einem Kupplungsgehäuse, welches z.B. nach dem Duckgussverfahren aus einem Metallmatrix-Verbundwerkstoff hergestellt wird, lässt sich in einem radial äusseren Bereich leicht eine Masseanhäufung ausbilden, die einen Schraubenkopfauflagebereich und ein Schraubenschaftaufnahmebereich aufweist. Durch diese Ausgestaltung kann der Schraubenkopf einer zur Verbindung des Gehäuses mit der zweiten Reibplatte bzw. dem Schwungrad vorgesehenen Schraubverbindung axial in einen Bereich verlagert werden, in dem eine gewisse Bauraumfreiheit gegeben ist und der dadurch frei gewordene Bauraum anderweitig genutzt werden.

Die Erfindung wird im Folgenden anhand von mehreren Zeichnungen beispielhaft erläutert. Es zeigen:
- Figur 1a:: eine schematische Darstellung einer Reibungskupplungsanordnung;
- Figur 1b:: einen vergrößerten Ausschnitt der Anpressplatte der Fig. 1a;
- Figur 2:: eine als Anpressplatte ausgeführte Reibplatte;
- Figur 3:: einen Axialschnitt einer konventionellen Anpressplatte im Vergleich zu einer Anpressplatte aus einem Metallmatrix-Verbundwerkstoff;
- Figur 4:: einen Axialschnitt einer Anpressplatte aus einem Metallmatrix-Verbundwerkstoff mit im Vergleich zu einer konventionellen Anpress-platte zusätzlichen Volumina als Wärmespeicherbereich;
- Figur 5:: eine Schnittdarstellung einer Kupplungsanordnung, wobei sich die Anpressplatte radial nach außen durch das Kupplungsgehäuse erstreckt;
- Figur 6:: eine Anpressplatte einer Mehrscheibenkupplung mit Radialvorsprüngen am Außenumfang;
- Figur 7:: eine Mehrscheibenkupplung mit einer Anpressplatte gemäß Figur 5 ;
- Figur 8a:: eine Schnittdarstellung einer in ein Schwungrad eingegossenen Reibplatte;
- Figur 8b:: eine Schnittdarstellung einer mit einem Schwungrad verschraubten Reibplatte;
- Figur 9:: eine Zwischenanpressplatte einer Mehrscheibenkupplung mit Ausnehmungen zur Kühlung der Platte;
- Figur 10:: eine Zwischenanpressplatte einer Mehrscheibenkupplung mit Radialbohrungen zur Kühlung der Platte;
- Figur 11 a-e:: verschiedene Anordnungsmöglichkeiten einer faserartigen Verstärkungskomponente in einer Anpressplatte;
- Figur 12:: eine Schnittdarstellung einer Anpressplatte mit einem eingegossenen Nietbolzen;
- Figur 13:: eine Schnittdarstellung einer Anpressplatte mit einem daran ausgebildeten Zylinderfortsatz zur Aufnahme einer Blattfederbohrung;
- Figur 14a-c:: Schnitte von teilweise dargestellten Kupplungsgehäusen.

Figur 1a zeigt zunächst eine übliche Reibungskupplungsanordnung 10 für Kraftfahrzeuge. Diese umfasst ein Kupplungsgehäuse 12, eine mit dem Kupplungsgehäuse 12 drehfest verbundene, in diesem axial verlagerbare Anpressplatte 14, welche eine erste Reibplatte darstellt und eine das Kupplungsgehäuse 12 tragende zweite Reibplatte 16, welche üblicherweise das Schwungrad eines Verbrennungsmotors bildet. Axial zwischen dem Schwungrad 1 6 und der Anpressplatte 14 ist eine Mitnehmerscheibe 18 angeordnet, die beidseitig Reibbeläge 20 aufweist, welche mit den am Schwungrad 16 und an der Anpressplatte 14 ausgebildeten Reiboberflächen zusammenwirken. Die Reibungskupplungsanordnung 10 umfasst weiterhin eine Membranfeder 22, mit der eine Druckkraft zum Betätigen der Kupplungsanordnung 10 auf die Anpressplatte 14 aufgebracht werden kann. Die Kupplungsanordnung 10 wird vervollständigt durch zeichnerisch nicht dargestellte Teile, wie eine mit dem Schwungrad verbundene Kurbelwelle des Verbrennungsmotos, eine Getriebeeingangswelle eines Schaltgetriebes, auf der die Mitnehmerscheibe drehfest und ein axial bewegliches Ausrücksystem angeordnet sind. Die Kupplungsanordnung 10 ist damit geeignet, eine Drehmomentübertragung von dem Verbrennungsmotor zu dem Schaltgetriebe wahlweise herzustellen oder zu unterbrechen.

Gemäß einem ersten Aspekt der Erfindung ist zumindest eine der Reibplatten 14, 16, zumindest teilweise aus einer Metallmatrix und mindestens einer darin eingeschlossenen nichtmetallischen Fremdphase, die gemeinsam einen Metallmatrix-Verbundwerkstoff bilden, ausgeführt. Die Metallmatrix besteht im Beispiel aus Aluminium oder einer Legierung, in der neben dem Hauptbestandteil Aluminium weitere Elemente, wie Silizium, Eisen, Kupfer, Magnesium, Nickel und Titan enthalten sind. Die Fremdphase wird durch mikroskopische SiC-Keramik-Partikel gebildet. Für die Leichmetallmatrix bieten sich aber auch Legierungen auf Magnesium- oder Titanbasis an. Als Partikelverstärkung sind generell hochschmelzende Oxide, Carbide, Boride oder Nitride, bspw. Al₂O₃, AIN, B₄C, Si₃N₄, SiC, Sialon, TiB₂, ZrO₂ einsetzbar.

Die genannten Verbundwerkstoffe können nach zahlreichen prinzipiell bereits bekannten Gußverfahren zu Reibplatten 14, 16 vergossen werden. Gegenüber dem konventionellen Werkstoffen Stahl oder Grauguß sind hier die meisten der gängigen Gußverfahren, wie bspw. das Druckguss-, das Kokillenguss-, das Sandgussoder das Schleudergussverfahren einsetzbar. Als besonders vorteilhaft erweist sich die Anwendung des Druckgussverfahrens, weil sich dadurch bereits eine sehr hohe Endformnähe erzielen lässt. Bei der Fertigung von Reibplatten 14, 16 aus einem Metallmatrix-Verbundwerkstoff, lässt sich somit gegenüber einer Grauguss-Reibplatte die dabei notwendige spanende Endbearbeitung größtenteils einsparen.

Ein besonders erwähnenswertes Herstellungsverfahren für Metallmatrix-Verbundwerkstoffe ist das Thixo-Gussverfahren, welches auf dem thixotropischen Verhalten von teilweise festem und teilweise flüssigen Schmelzgut beruht. Dabei wird eine zunächst als Schmelze vorliegende Legierung abgekühlt, bis diese zu etwa 40 % erstarrt ist. Während der Abkühlung wird das vorliegende Gemisch aus fester und flüssiger Phase gerührt, um die sich bei der Erstarrung bildenden Dendriten aufzubrechen, wobei gleichzeitig die keramische Fremdphase zugeführt wird. Dabei entsteht eine Aufschlämmung mit thixotropischen Eigenschaften, welche als Verbundguß in eine Form gepresst wird. Anstatt von einer Schmelze, kann bei dem Verfahren auch von einer zunächst fest vorliegenden Legierung ausgegangen werden, welche durch Erhitzen in einen thixotropen Zustand überführt wird.

Eine Wärmebehandlung einer aus einem Metallmatrix-Verbundwerkstoff bestehenden Reibplatte kann je nach Anwendungsfall der Kupplung vorgesehen werden, wenn die Gefahr der Koagulation, d.h. der Versprödung durch Zusammenwachsen von verschiedenen Phasen, durch Kenntnis der Anwendungstemperatur ausgeschlossen werden kann.

In Figur 1b ist ein vergrößerter Ausschnitt der Anpressplatte 14 der Figur 1a dargestellt, welche funktionell in einen Reibbereich 24 und einen Wärmespeicherbereich 26 aufgeteilt ist. Der Reibbereich 24 (punktiert gezeichnet) wird durch den oberflächennahen Bereich der Anpressplatte 14 gebildet, der mit dem Reibbelag 20 der Mitnehmerscheibe 18 zusammenwirkt. Da die Anpressplatte 14 einem betriebsbedingten Verschleiß unterliegt, wird im Lichte einer noch erläuterten Weiterbildung der Erfindung als Reibbereich 24 bei einer unbenutzten Reibplatte 14 eine oberflächennahe Materialschicht, die etwa der Verschleissschicht entspricht, bspw. bis in eine Tiefe von etwa 0,5 bis höchstens etwa 1mm angesehen. Bei einer Anpressplatte, die ihre maximal vorgesehene Lebensdauer erreicht hat, besteht der Reibbereich 24 dann ausschließlich aus deren Reiboberfläche. An den Reibbereich 24 schliesst sich ganzflächig der Wärmespeicherbereich 26 an, der die bei einem Kupplungsvorgang in einer kurzen Zeitspanne anfallende Reibungswärme zunächst schnell aufnimmt und kurz zwischenspeichert, um diese nach dem Kupplungsvorgang wieder möglichst schnell an benachbarte Baukomponenten und die im Kupplungsgehäuse 12 zirkulierende Luft abzugeben. Der Wärmespeicherbereich 26, der somit fast die gesamte Reibplatte 14 ausbildet, dient gleichzeitig als Tragebereich für den Reibbereich 24. Bei einer Mehrscheibenkupplung sind bei den axial innen angeordneten Reibplatten jeweils zwei Reibbereiche 24 mit einem dazwischen angeordneten Wärmespeicherbereich 26 vorgesehen.

Es ist in Kenntnis der Werkstoffeigenschaften nicht notwendig, die gesamte Anpressplatte 14 aus dem Metallmatrix-Verbundwerkstoff zu fertigen. Vielmehr ist es sogar vorteilhaft, den Volumenanteil der nichtmetallischen Fremdphase in dem Reibbereich 24 größer als denjenigen im Wärmespeicherbereich 26 auszubilden. Somit können einerseits die verschleisshemmende Wirkung des Verbundwerkstoffes im Reibbereich 24 und die sehr hohe Wärmeleitfähigkeit der Leichtmetallmatrix und deren Wärmespeichervermögen im Wärmespeicherbereich 26 bestens ausgenutzt werden. Weitergehend ist es deshalb günstig, die Anpreßplatte 14 nur teilweise und zwar ausschließlich im Reibbereich 24 mit dem Metallmatrix-Verbundwerkstoff auszubilden und den Wärmespeicherbereich 26 bis auf einen Übergangsbereich zum Reibbereich 24 im Wesentlichen nur aus dem Werkstoff der metallischen Grundmatrix zu fertigen.

Eine derartige Anpressplatte wird zunächst bspw. durch Anwendung des Druckgußverfahrens aus dem Material der Metallmatrix gegosssen und anschließend wird in dem Wärmespeicherbereich 26 durch eine Oberflächenbehandlung in einer Schicht, deren Ausdehnung die der Verschleissschicht etwa entspricht, die keramische Partikelverstärkung eingebracht, wodurch ausschließlich in diesem oberflächennahen Bereich ein Metallmatrix-Verbundwerkstoff gebildet wird. Für die Oberflächenbehandlung können alle dafür geeignete Techniken, z.B. das Laserpulverbeschichten, das Plasmaspritzen oder andere bekannte Verfahren angewandt werden. Es ist auch denkbar, die Fremdphase nicht ausschließlich in Form von unregelmäßig geformten oder etwa sphärischen Partikeln, sondern auch faserförmig als gewebeartige Struktur in die Oberfläche einer Anpressplatte 14, z.B. durch Anschmelzen der Anpressplatte 14 und anschließendes Einwalzen oder Einpressen eines keramischen Netzes, z.B. als Saphirgewebe, einzubringen. Alternativ kann eine Giessform an vorbestimmten Stellen mit den zur Vertärkung vorgesehenen Partikeln befüllt oder mit dem Gewebe ausgelegt werden, wobei die fremdphasige Verstärkung beim Gießen von der Schmelze eingeschlossen wird und im Wesentlichen auf der Oberfläche der Reibplatte 14 einen Reibbereich 24 ausbildet.

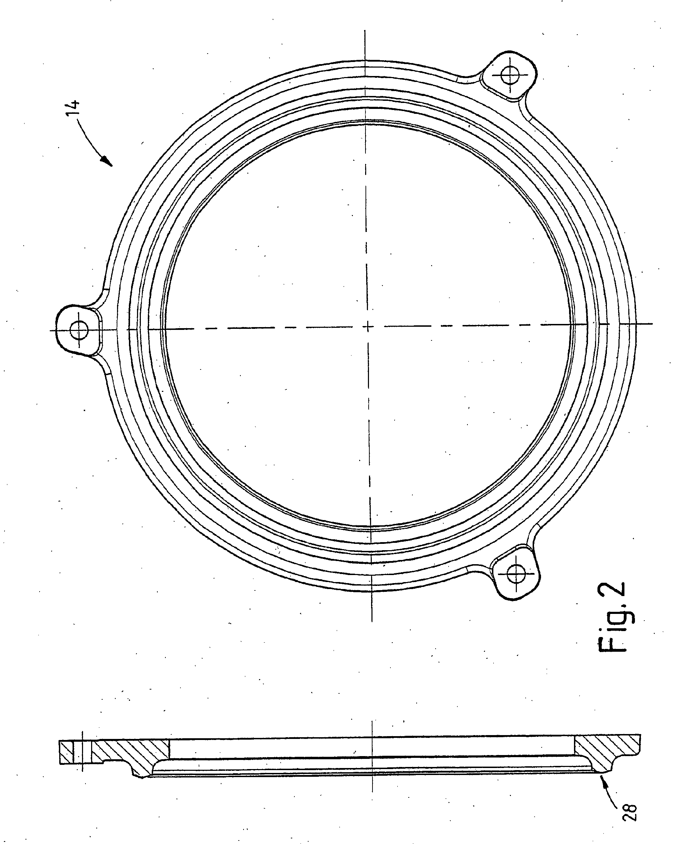

Figur 2 zeigt eine Anpressplatte 14, die sich von konventionellen Anpressplatten dadurch unterscheidet, dass die Membranfederschneide 28 in Umfangsrichtung kreisförmig geschlossen ausgebildet ist. Wegen der günstigen thermischen Eigenschaften ist diese Ausbildung im Vergleich zu Grauguß bei partikelverstärktem Aluminium ohne Weiteres möglich. Die gegenüber konventionellen Anpressplatten zusätzlichen Masseanteile stellen eine zusätzliche Wärmespeicherkapazität dar.

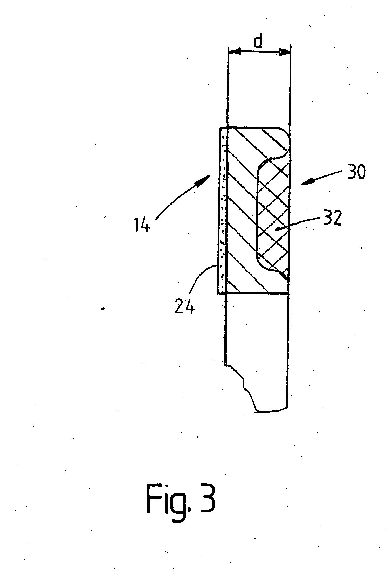

Fig. 3 stellt einen weiteren axialen Schnitt durch eine Anpressplatte 14 dar. Das konventionelle Ausgangsmodell aus Grauguss (einfach schraffiert) hat aus Steifigkeitsgründen die Dicke d. Zur Gewichtsersparnis ist dort der dem Reibbereich 24 abgewandte Rücken 30 der Anpressplatte 14 mit einer Ausnehmung 32 (kreuzschraffiert) ausgebildet. Eine Anpressplatte 14 aus partikelverstärktem Aluminium muß zur Erzielung einer vorgegebenen Wärmespeicherkapazität mit einem erhöhtem Matrialvolumen ausgebildet werden. Dabei wird die Ausnehmung 32 mit dem MMC aufgefüllt.

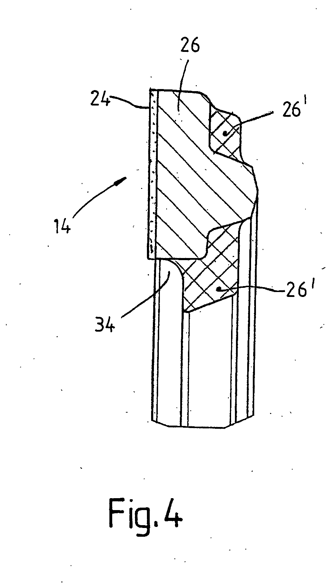

Figur 4 zeigt einen Axialschnitt einer Anpressplatte 14 aus einem Metallmatrix-Verbundwerkstoff, bei der im Vergleich zu einer konventionellen Anpressplatte (einfach schraffiert) ebenfalls weitere Volumina als Wärmespeicherbereiche 26' (kreuzschraffiert) zusätzlich zu dem bereits vorhandenen Wärmespeicherbereich 26 ausgebildet sind. Dafür bietet sich zunächst idealerweise der Bereich am Innendurchmesser 34 der Reibplatte 14 an. Die zusätzliche Masse führt an dieser Position nur zu einer geringen Erhöhung des Massenträgheitsmoments. Anders als bei Grauguss ist die reibflächenferne Ergänzung des Wärmespeicherbereichs 26 wegen der sehr guten Wärmeleitfähigkeit des Metallmatrix-Verbundwerkstoffs möglich. Falls jedoch unter bestimmten Bauraumzwängen die Anordnung des Wärmespeichers 26 im radial äußeren Bereich der Anpressplatte erforderlich wird, so ist dieses wegen der geringen Dichte des Metallmatrix-Verbundwerkstoffs auch hier möglich.

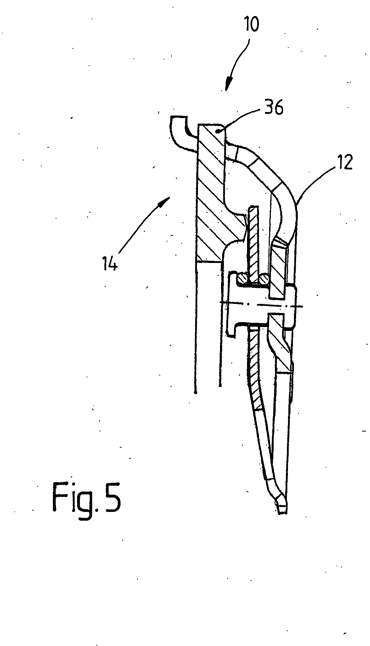

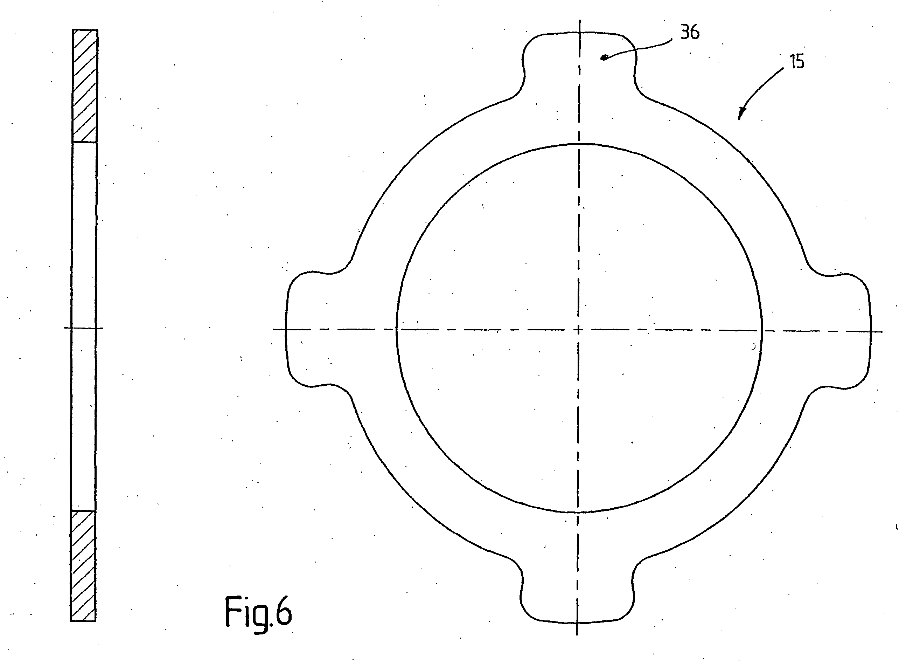

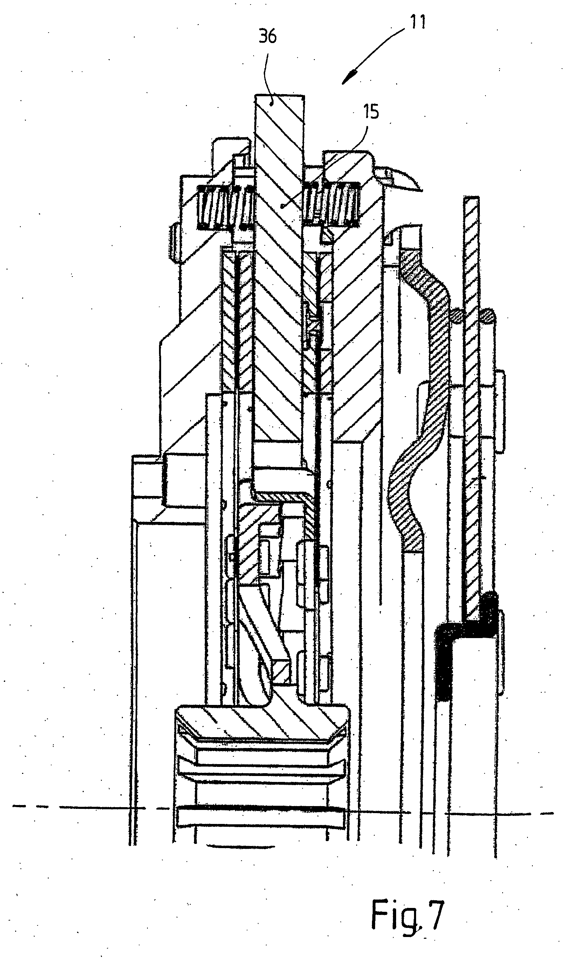

Figur 5 zeigt eine teilweise Schnittdarstellung einer Kupplungsanordnung 10, wobei am Außenumfang der Anpressplatte 14 mehrere Radialvorsprünge 36 ausgebildet sind, die sich durch Öffnungen durch das Kupplungsgehäuse 12 erstrecken. Somit liegt ein Teil der Anpressplatte 14 im dem in einer zeichnerisch nicht dargestellten Getriebeglocke zirkulierendem Luftstrom. Die Radialvorsprünge 36 der Anpressplatte bilden bei Rotation somit eine Zwangskühlvorrichtung aus und erfahren beim Betreiben der Kupplungsanordnung 10 die größtmögliche Umfangsgeschwindigkeit, was zu einer besonders guten Kühlung der gesamten Anpressplatte 14 führt. Es ist weiterhin möglich, den durch das Kupplungsgehäuse 12 hindurchdringenden Teil der Anpressplatte 14 in Form von Schaufeln, Flügeln oder ähnlichen, die Wärmeübertragung erhöhenden Elementen zu gestalten. Die soeben beschriebene Ausgestaltung einer Reibplatte 14 lässt sich selbstverständlich auch auf die Zwischenanpressplatten einer Mehrscheibenkupplung 11 übertragen, was in den Figuren 6 und 7 erfolgt. Zwischenanpressplatten in Mehrscheibenkupplungen sind wegen des beidseitigen Reibleistungseintrags thermisch besonders belastet. Die Zwischenanpressplatte 15 weist dazu vier Radialvorsprünge 36 auf, die aufgrund der schnellen Wärmeaufnahme als zusätzlicher Wärmespeicherbereich 26 und als Ventilationselement im Sinne einer ebenfalls zügigen Wärmeabfuhr dienen.

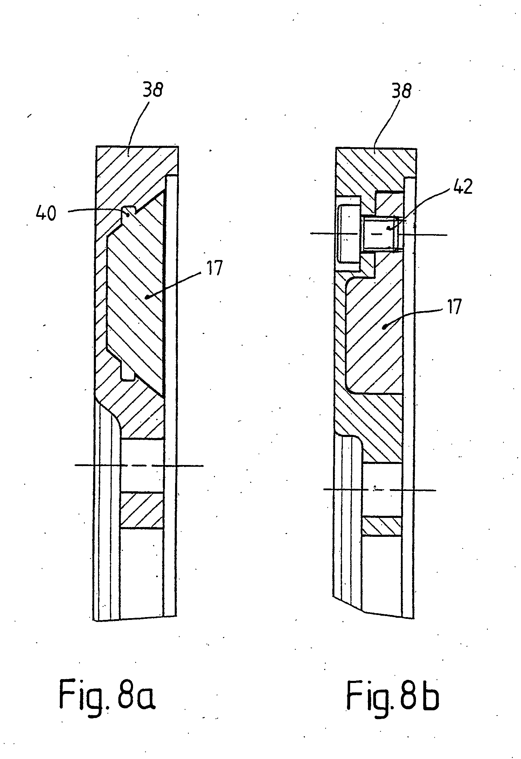

Figur 8a zeigt anhand einer weiteren Schnittdarstellung eine in ein Schwungrad 38 oder in ein Sekundärschwungrad, eingegossene Reibplatte 17, wobei diese erfindungsgemäß aus partikelverstärktem Aluminium vorgesehen ist, um mit dem Reibbelag der Mitnehmerscheibe 18 zusammenzuwirken. Die Reibplatte 17 wird hierbei durch eine Verzapfung 40 in dem Schwungrad 38 sicher fixiert.

Figur 8b zeigt als Alternative dazu eine Schraubverbindung 42, mit der die Reibplatte 17 zum Schwungrad 38 festgelegt wird. In diesem Fall kann das Schwungrad 38 im Wesentlichen unverändert aus Grauguss beibehalten werden, um das gewünschte hohe Massenträgheitsmoment zu erzielen. Ebenso wäre hierbei anstelle der Schraub-, eine Nietverbindung möglich.

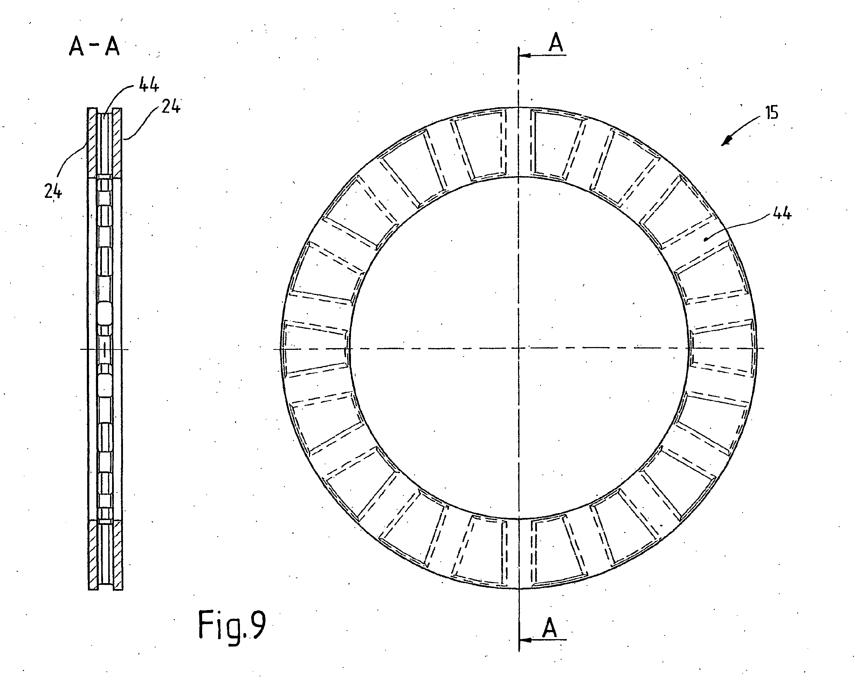

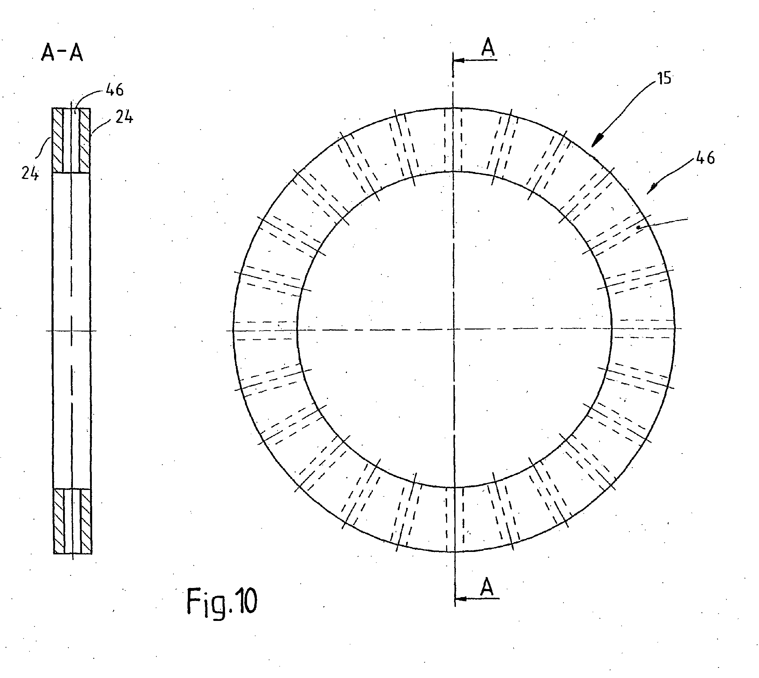

Die Figuren 9 und 10 zeigen Zwischenanpressplatten 15 einer Mehrscheibenkupplung, in die Lüftungsöffnungen eingebracht sind. Figur 9 zeigt dazu eine Zwischenanpressplatte 15 mit Ausnehmungen 44 im axial inneren Bereich, die zwischen den aussen angeordneten Reibbereichen 24 ausgebildet sind. In Figur 10 sind in die Zwischenanpressplatte 15 mehrere Radialbohrungen 46 eingebracht. Die Lüftungsöffnungen können alternativ auch derart ausgebildet sein, dass sich ihre Längsachse nicht radial, sondern spiralförmig nach außen erstreckt. Hierdurch wird eine Zwangsströmung durch diese Kanäle hindurch hervorgerufen.

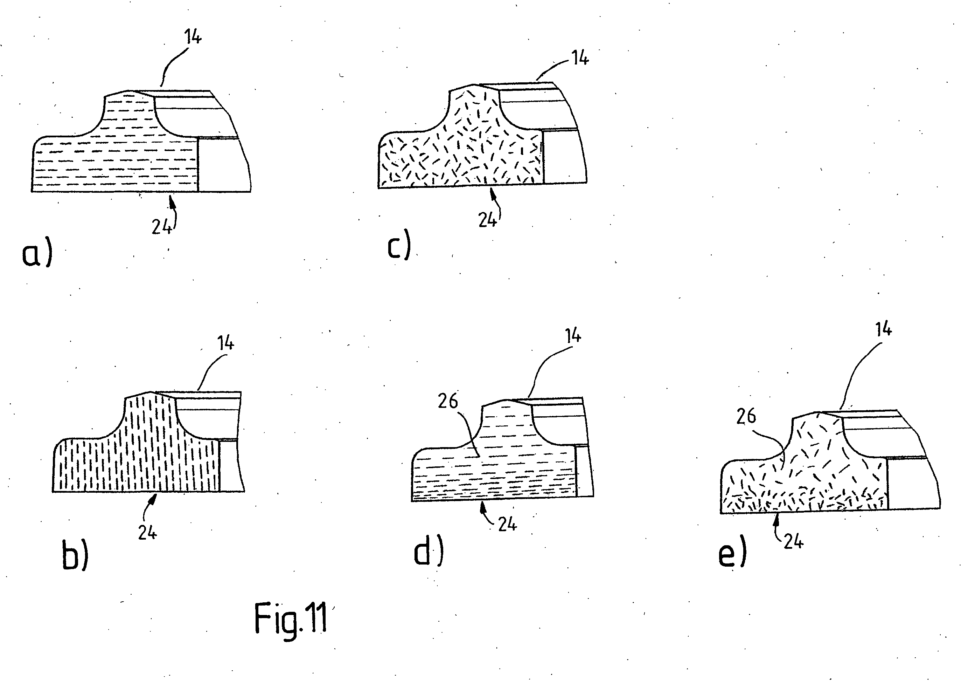

Wie bereits oben erwähnt, kann die keramische Fremdphase auch faserförmig in der Matrix ausgebildet sein. Die Figuren 11a-e zeigen dazu verschiedene Anordnungsmöglichkeiten der Verstärkungskomponente in Bezug zur Geometrie einer Anpressplatte 14. Es ist dabei möglich, dass diese Fasern in einer Vorzugsrichtung (Textur) in der Matrix angeordnet sind. Die Ausrichtung der Fasern kann dabei parallel zum Reibbereich 24 (Fig. 11a) oder auch senkrecht zu diesem sein (Fig. 11b). In Fig. 11c ist eine unregelmäßige Richtungsverteilung dargestellt. Es wurde bereits erläutert, dass es vorteilhaft ist, die Volumenkonzentration der Fremdphase im Reibbereich 24 größer als diejenige im Speicherbereich 26 auszubilden. Dieser Sachverhalt ist schematisch in den Figuren 11d und 11e ausgeführt. Die Faserorientierung ist bei der Herstellung einer Anpressplatte 14 im Druckgussverfahren über die Gestaltung des Angusses, speziell dessen Größe und Lage und die sich daraus im Schmelzgut ergebenden Zug- und Druckspannungen beeinflussbar. Eine Konzentrationsveränderung des Anteils der Fremdphase über die Ausdehnung der Reibplatte 14 (Gradierung) kann z.B. erzielt werden, wenn das gegossene Bauteil längere Zeit im schmelzflüssigen Zustand gehalten wird, so dass die Fasern unter einem Kraftfeld, z.B. der Gravitation oder der Zentrifugalkraft, einen Verteilungsgradienten annehmen. Eine Gradierung ist auf diese Weise auch bei einer partikelförmigen Fremdphase einstellbar.

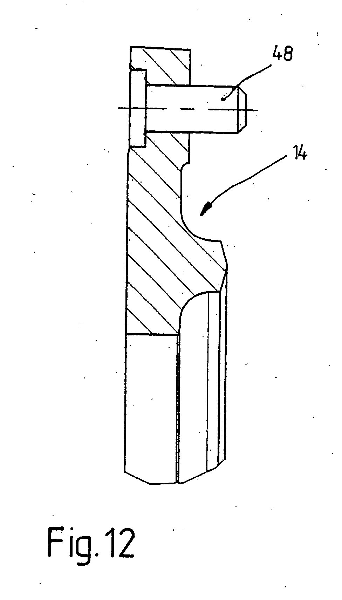

Fig. 12 stellt eine weitere Anpressplatte 14 dar, bei deren Herstellung z.B. mittels Druckguss oder Sandguss gleichzeitig mehrere Nietbolzen 48 am Aussenumfang der Anpressplatte 14 zur Aufnahme einer nicht gezeigten Blattfederbohrung mit eingegossen sind.

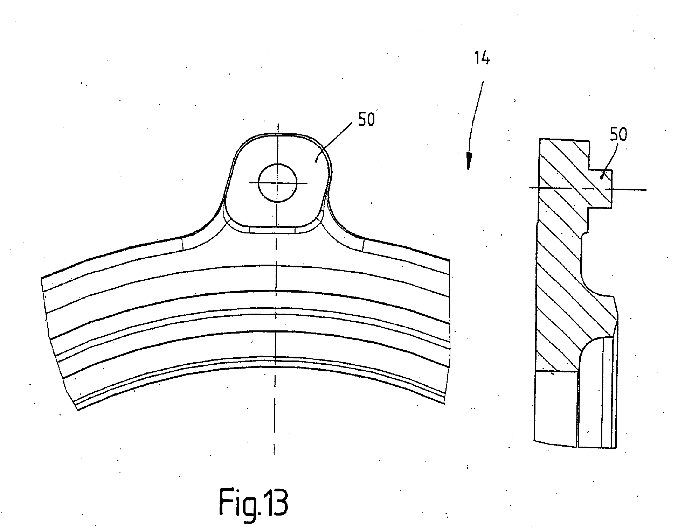

Durch die Ausbildung einer Anpressplatte aus einem Metallmatrix-Verbundwerkstoff und der Anwendung des Druckguss- oder Sandgussverfahrens können in einer Weiterbildung gemäß Figur 13 nunmehr auch mehrere Zylinderfortsätze 50 zur Aufnahme einer Blattfederbohrung direkt aus dem Verbundwerkstoff gestaltet werden. Nach dem Auflegen einer Blattfeder wird der Bund des Zylinderfortsatzes plastisch verformt, um die Feder zu fixieren.

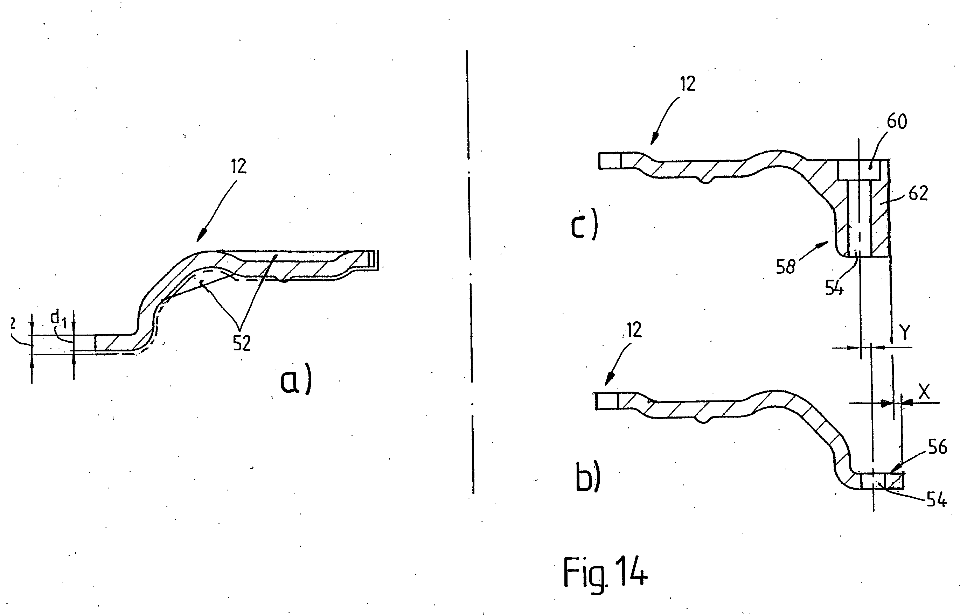

Partikelverstärktes Aluminium hat gegenüber unverstärktem Aluminium einen deutlich höheren E-Modul. Somit lässt sich ein leichtes und gleichzeitig steifes Gehäuse aus dem Metallmatrix-Verbundwerkstoff in einfacher Weise im Druckgussverfahren herstellen. Zu den verwendeten Werkstoffen und Herstellungsverfahren wird auf die zu Reibplatten gemachten Ausführungen verwiesen, sofern diese hier ebenso zutreffend sind. Zu einer weiteren Gewichtsreduzierung und Erhöhung der Steifigkeit können mit Hilfe des Druckgussverfahrens in ein Kupplungsgehäuse 12 leicht Versteifungsrippen 52 eingebracht werden, wie dieses beispielhaft anhand von Figur 14a dargestellt ist.

Figur 14b zeigt ausschnittweise den radial äußeren Bereich eines konventionellen aus Stahlblech gefertigten Kupplungsgehäuses 12, welches im radial äußeren Bereich Bohrungen 54 aufweist. Dabei umfasst eine Bohrung 54 eine Auflagefläche 56 für einen nicht gezeigten Schraubenkopf, welcher für die Verschraubung des Gehäuses 12 an einem Schwungrad eines Verbrennungsmotors vorgesehen ist. Wird das Kupplungsgehäuse 12 aus einem Metallmatrix-Verbundwerkstoff im Druckgussverfahren hergestellt, so lässt sich im radial äusseren Bereich des Gehäuses eine Masseanhäufung 58 realisieren, in der ein Schraubenkopfauflagebereich 60 und ein Schraubenschaftaufnahmebereich 62 ausgebildet sind. Daraus ergibt sich der Vorteil, dass die Bohrung 54 zur Aufnahme der Verschraubung um den Betrag Y nach radial innen versetzt werden kann, da für die Schraubenkopfauflage im Außenbereich mehr Bauraum zur Verfügung steht als bei der konventionellen Ausführung gemäß Fig. 14b. Diese Versetzung ermöglicht es, den Gehäuseaußenradius um das Maß X zu verkleinern, wodurch Bauraum gewonnen wird. Alternativ besteht die Möglichkeit, den Gehäuseaußenradius beizubehalten und den nutzbaren Kupplungsinnenraum zu vergrößern. In diesem können dann eine durchmesservergrößerte Mitnehmerscheibe und gleichfalls größere Reibplatten angeordnet werden, woraus sich eine Erhöhung des mittleren Reibradius und somit eine Erhöhung des über die Kupplung weiterleitbaren Drehmoments ergibt.

## Patentansprüche

1. Reibungskupplungsanordnung, insbesondere für Kraftfahrzeuge, umfassend
- ein Kupplungsgehäuse,
- mindestens eine mit dem Kupplungsgehäuse drehfest verbundene, in diesem axial verlagerbare erste Reibplatte und
- eine das Kupplungsgehäuse tragende zweite Reibplatte,
- mindestens eine Mitnehmerscheibe, die axial benachbart zu der mindestens einen ersten und der zweiten Reibplatte angeordnet ist und die beidseitig Reibbeläge aufweist, welche mit den benachbarten Reibplatten zusammenwirken, sowie
- eine Feder, mit der eine Druckkraft zum Betätigen der Kupplung auf die mindestens eine erste Reibplatte aufgebracht wird;
**dadurch gekennzeichnet,**
**dass** mindestens eine Reibplatte (14, 15, 16, 17) zumindest teilweise aus einer Metallmatrix und mindestens einer darin eingeschlossenen nichtmetallischen Fremdphase, die gemeinsam einen Metallmatrix-Verbundwerkstoff bilden, ausgeführt ist.

2. Reibungskupplungsanordnung, insbesondere für Kraftfahrzeuge, umfassend
- ein Kupplungsgehäuse,
- mindestens eine mit dem Kupplungsgehäuse drehfest verbundene, in diesem axial verlagerbare erste Reibplatte und
- eine das Kupplungsgehäuse tragende zweite Reibplatte,
- mindestens eine Mitnehmerscheibe, die axial benachbart zu der mindestens einen ersten und der zweiten Reibplatte angeordnet ist und die beidseitig Reibbeläge aufweist, welche mit den benachbarten Reibplatten zusammenwirken, sowie
- eine Feder, mit der eine Druckkraft zum Betätigen der Kupplung auf die mindestens eine erste Reibplatte aufgebracht wird,
**dadurch gekennzeichnet,**
**dass** das Kupplungsgehäuse (12) aus einer Metallmatrix und mindestens einer darin eingeschlossenen nichtmetallischen Fremdphase, die gemeinsam einen Metallmatrix-Verbundwerkstoff bilden, ausgeführt ist.

3. Reibungskupplungsanordnung nach Anspruch 1 oder 2,
**dadurch gekennzeichnet,**
**dass** die Metallmatrix aus einem Leichtmetall oder einer Leichtmetalllegierung, basierend auf mindestens einem der Elemente Aluminium, Magnesium oder Titan gebildet ist.

4. Reibungskupplungsanordnung nach einem der Ansprüche 1 bis 3,
**dadurch gekennzeichnet,**
**dass** die Fremdphase ein hochschmelzendes Oxid, Carbid, Borid oder Nitrid darstellt.

5. Reibungskupplungsanordnung nach einem der Ansprüche 1 bis 4,
**dadurch gekennzeichnet,**
**dass** die Fremdphase in Form von Fasern in die Metallmatrix eingelagert ist.

6. Reibungskupplungsanordnung nach Anspruch 5,
**dadurch gekennzeichnet,**
**dass** die Fasern in der Metallmatrix eine Textur aufweisen.

7. Reibungskupplungsanordnung nach Anspruch 5,
**dadurch gekennzeichnet,**
**dass** die Fasern eine gewebeartige Struktur bilden.

8. Reibungskupplungsanordnung nach Anspruch 1 oder einem der Ansprüche 3 bis 7,
**dadurch gekennzeichnet,**
**dass** eine Reibplatte (14, 15, 16, 17) mindestens einen Reibbereich (24) und einen Wärmespeicherbereich (26) umfasst, wobei der Volumenanteil der nichtmetallischen Fremdphase in dem Reibbereich (24) größer ist als derjenige im Wärmespeicherbereich (26) .

9. Reibungskupplungsanordnung nach Anspruch 1 oder einem der Ansprüche 3 bis 8,
**dadurch gekennzeichnet,**
**dass** die mindestens eine Reibplatte eine Zwischenanpressplatte (15) darstellt, welche zur Ausbildung einer Kühlstruktur eine Mehrzahl von Ausnehmungen (44, 46) aufweist.

10. Reibungskupplungsanordnung nach Anspruch 1 oder einem der Ansprüche 3 bis 9 ,
**dadurch gekennzeichnet,**
**dass** die mindestens eine Reibplatte (14, 15, 16, 17) nach einem Gussverfahren gefertigt ist.

11. Reibungskupplungsanordnung nach einem der Ansprüche 2 bis 9 ,
**dadurch gekennzeichnet,**
**dass** das Kupplungsgehäuse (12) nach einem Gußverfahren hergestellt ist.

12. Reibungskupplungsanordnung nach Anspruch 10 oder 11,
**dadurch gekennzeichnet,**
**dass** das Gussverfahren ein Druckguss-, ein Kokillenguss-, ein Sandguss-, Schleuderguss- oder ein Thixo-Gussverfahren ist.

13. Reibungskupplungsanordnung nach Anspruch 1 oder einem der Ansprüche 3 bis 10 oder 12,
**dadurch gekennzeichnet,**
**dass** der Reibbereich (24) durch eine Oberfächenbehandlung des Wärmespeicherbereichs (26) erzeugt wird.

14. Reibungskupplungsanordnung nach Anspruch 1 oder einem der Ansprüche 3 bis 10, 12 oder 13,
**dadurch gekennzeichnet,**
**dass** die zweite Reibplatte (16, 17) mit Befestigungsmitteln am Schwungrad (38) eines Verbrennungsmotors oder an einem Sekundärschwungrad angeordnet ist.

15. Reibungskupplungsanordnung nach Anspruch 1 oder einem der Ansprüche 3 bis 10, 12 oder 13,
**dadurch gekennzeichnet,**
**dass** die zweite Reibplatte (17) mit dem Schwungrad (38) oder dem Sekundärschwungrad vergossen ist.

16. Reibungskupplungsanordnung nach Anspruch 1 oder einem der Ansprüche 3 bis 10, 12 oder 13,
**dadurch gekennzeichnet,**
**dass** die mindestens eine Reibplatte (14) eine in Umfangsrichtung kreisförmig geschlossene Membranfederschneide (28) aufweist.

17. Reibungskupplungsanordnung nach einem der Ansprüche 8 bis 10 oder 12 bis 16,
**dadurch gekennzeichnet,**
**dass** der Wärmespeicherbereich (26) der mindestens einen Reibplatte (14, 15, 16, 17) radial im Bereich des Innendurchmessers (34) am Reibbereich (24) erweitert ist.

18. Reibungskupplungsanordnung nach Anspruch 1 oder einem der Ansprüche 3 bis 10 oder 12 bis 17,
**dadurch gekennzeichnet,**
**daß** die mindestens eine Reibplatte (14, 15) am Außenumfang eine Mehrzahl von Radialvorsprüngen (36) aufweist, die sich durch Öffnungen des Kupplungsgehäuses (12) erstrecken und dabei eine Zwangskühlvorrichtung ausbilden.

19. Reibungskupplungsanordnung nach Anspruch 1 oder einem der Ansprüche 3 bis 10 oder 12 bis 18,
**dadurch gekennzeichnet,**
**daß** die mindestens eine Reibplatte (14) einen darin eingegossenen Nietbolzen (48) zur Aufnahme einer Blattfederbohrung umfasst.

20. Reibungskupplungsanordnung nach einem der Ansprüche 2 bis 7, 11 oder 12 ,
**dadurch gekennzeichnet,**
**dass** das Kupplungsgehäuse (12) Versteifungsrippen (52) aufweist.

21. Reibungskupplungsanordnung nach einem der Ansprüche 2 bis 7, 11, 12 oder 20,
**dadurch gekennzeichnet,**
**dass** das Kupplungsgehäuse (12) im radial äusseren Bereich eine Masseanhäufung (58) aufweist, in der ein Schraubenkopfauflagebereich (60) und ein Schraubenschaftaufnahmebereich (62) ausgebildet sind.
